# EUROPÄISCHE PATENTANMELDUNG

(11) **EP 1 998 192 A2**
(43) Veröffentlichungstag der Anmeldung: **03.12.2008**
(21) Anmeldenummer: 08164500.4
(22) Anmeldetag: 03.04.2003
(51) Int. Cl.: G02B 5/12, B23Q 16/00, G02B 5/124, B29D 11/00

(54) **Tripelreflektor mit Fresnel-Linse und diesen enthaltendes Weitwinkelsensorsystem**

(30) Priorität: 14.04.2002 DE 10216579
(62) Teilanmeldung aus: 03007645.9
(71) Anmelder: Gubela, Hans-Erich, Sen., 77887 Sasbachwalden (DE)
(72) Erfinder: Gubela, Hans-Erich, Sen., 77887 Sasbachwalden (DE)
(74) Vertreter: Reule, Hanspeter

(57) **Zusammenfassung**

Reflektionssensoren senden Licht auf einen Tripelreflektor und messen das retroflektierte Licht. Weicht die Einstrahlrichtung des Lichtes zu stark vom Lot des Tripelreflektors ab, wird das retroflektierte Licht, das als Signal dient, zu schwach oder wird überhaupt nicht zum Sender retroflektiert.

Das Weitwinkelsensorsystem mit Tripelreflektor ermöglicht die Beobachtung einer großen Fläche mit einem Öffnungswinkel von 80° und mehr.

Das Weitwinkelsensorsystem mit Tripelreflektor besteht aus einer Lehre zur Wahl des Beobachtungswinkels und eines Tripelreflektors, der aus einer Vielzahl von Tripeln besteht. Wobei die um das Tripelzentrum angeordnete Tripelteilflächen der Tripel nahezu im Rechten Winkel zueinander stehen und die Achsen der Tripel wechselweise um zum Beispiel +/-5° oder mehr vom Einfallslot der Reflektoroberfläche abweichen.

## Beschreibung

Die Erfindung betrifft ein Verfahren und die Ausbildung eines geeigneten Reflektors zur weitwinkligen Beobachtung einer Reflexfläche mittels eines Reflexsensors, der auch mit Polarisationsfiltern ausgerüstet sein darf oder als Laserreflexsensor arbeiten kann.

Das Weitwinkelsensorsystem mit Tripelreflektor besteht aus einer Lehre zur Wahl des Beobachtungswinkels und eines Tripelreflektors, der aus einer Vielzahl von Tripeln besteht. Wobei die um das Tripelzentrum angeordneten Tripelteilflächen nämlich Spiegelseiten, nahezu im Rechten Winkel zueinander stehen und die Achse der Tripels wechselweise um -5° und +5° oder mehr vom Einfallslot der Reflektoroberfläche abweicht. Besonderes Merkmal der Tripel ist die erhebliche Verlängerung mindestens einer Tripelfläche.

Ziel des Weitwinkelsensorsystems mit Tripelreflektor ist es, ein Reflexsensorsystem zu schaffen, mit dem eine Fläche beobachtet werden kann mit einem Öffnungswinkel von 80° und mehr bei einem Rückstrahlwert an jedem Beleuchtungswinkel der beobachteten horizontalen Fläche von mindestens 3.000 mcd/Ix. Außerdem können mit diesem System sich bewegende Körper im Raum, zum Beispiel Fahrzeuge oder Transportgondeln beobachtet werden, auch wenn diese Körper ihren Winkel zum Beobachter verändern, zum Beispiel wenn eine Fördergondel in einer Kurve geführt wird. Erst dadurch, dass von dem zu beobachtenden Körper immer ein Reflexsignal in seiner Intensität stark genug empfangen wird von mindestens 3.000 mcd/Ix, kann auch eine angeschlossene Messtechnik, zum Beispiel zur Entfernungsmessung oder Positionsvermessung zuverlässig arbeiten.

Das Problem ist, dass es bisher für die Aufgaben der Reflexsensorik keine qualitativ ausreichenden Reflexflächen auf dem Markt gibt, die ein intensives Retroflexsignal beständig liefern, besonders dann nicht, wenn die Reflexfläche mit 40° und mehr abweichend vom Lot positioniert wird. Die auf dem Markt befindlichen Rückstrahler oder Reflexfolien, so weit sie weitwinklige Eigenschaften haben, sind konzipiert für den Straßenverkehr, für reflektierende Schilder oder Personenschutzrückstrahler an Kleidern. Diese reflektierenden Strukturen erzeugen eine breitbandige Verteilung des reflektierten Lichts. Dadurch reicht ihre reflektierte Lichtenergie nicht aus, Reflexsensoren gebündelte zuverlässige Retroflexsignale zu geben. Für Reflexsensoren muss möglichst der größte Teil des Lichtes retroflektiert werden zielgerichtet zum Empfänger.

Erst durch eine konstante, hohe Retroflexleistung wird es möglich, den Sensor zusätzlich mit einem Polarisationfiltersystem zu versehen, das naturgemäß die Hälfte bis zu zwei Drittel des gesendeten Lichtes verbraucht, so dass diese Energie nicht mehr für den Empfänger des Sensors zur weiteren Interpretation zur Verfügung steht. Das Polarisationfiltersystem dient vor allem dazu, das vom Sensor ausgesandte Licht und dann über den Retroflektor in seiner Polarität gedrehte und zurückgeworfene Licht zu unterscheiden von Fremdlicht oder Reflexionen, die von anderen Körpern im Raum ausgehen können. Das erfindungsgemäße Weitwinkelsystem mit seinem Tripelreflektor besonderer Bauart ermöglicht den Betrieb des Sensors mit Polarisationsfiltersystem.

Außerdem kann dieser neuartige Tripelreflektor auch mit bekannter Technologie als Mikrocubereflektor ausgebildet werden, wie er besonders für die Lasersensorik oder Folientechnik erforderlich ist. Die Anforderungen zur Lasersensorik sind dazu vom Erfinder in der DE 197 27 527 beschrieben. Denn für das gestellte Ziel der vorliegenden Erfindung sind pyramidale Tripelflächen völlig ungeeignet, zum einen, weil sie nur ca. 66° des Lichtes retroflektieren, zum anderen, weil sie für die erforderliche Lichtstrahlkontur und Präzision für Lasersensoren ungeeignet sind. Die Erfindung bedient sich deshalb einer besonderen Gestaltung von Fulicube-Tripeln.

Der Stand der Technik kennt das würfelförmige, reflektierende Spiegelsystem, dass in der Messtechnik als Perkin-Elmer-Pyramide bekannt ist und bei Rückstrahlern heute als Fullcube bezeichnet wird. Ein Fullcube-Tripel besteht aus drei quadratischen Spiegeln, die zueinander im Rechten Winkel stehen und das Licht zur Lichtquelle retroflektieren. In der GB-PS 269 760 von Stimson sind Werkzeuge beschrieben, die die Herstellung der würfelförmigen, reflektierenden Flächen durch Verwendung einzelner angeschliffener Stifte oder gekerbter Platten vorschlagen.

In der DE 44 10 994 von Gubela sind Körper und/oder Bauteile beschrieben eines strangförmigen Tripelreflektors und/oder Werkzeugelements zur Abformung von Tripelreflektoren mit Fullcube-Eigenschaften. Diese strangförmigen Bauteile lassen sich besonders einfach auch in der Mikrostrukturtechnik zu Flächen zusammenfügen und sind eine Fertigungstechnik, die auch für die Formkörperherstellung oder Darstellung des erfindungsgemäßen Reflektors mit Weitwinkeleigenschaften für die Sensoraufgaben geeignet ist.

Der in der vorliegenden Erfindung beschriebene Reflektor und die Herstellung der Werkzeuge basiert zwar auf den bekannten Verfahren zur Herstellung von Tripelreflektoren, wählt aber eine neuartige Form aus, die dem Fullcube nahe kommt.

Es gibt auch andere Tripelformen, wie zum Beispiel die dreiseitige Pyramide. Hier muss aber der Abwandlung des Fullcubes der Vorzug gegeben werden, weil er grundsätzlich einen wesentlich geringeren Streuverlust hat als die Pyramide. Pyramidale Tripelstrukturen lassen sich aus einer ebenen gemeinsamen Fläche schneiden, hingegen benötigen Fullcube-Tripel im Werkzeugbau die Anordnung einer Vielzahl von Bauelementen, um große strukturierte Flächen aus einer Vielzahl von Tripeln darzustellen. Die Fertigungsmethoden und ihre Vor- und Nachteile bei der Herstellung von Tripeln sind dem Fachmann bekannt und brauchen hier nicht wiederholt zu werden.

Die Erfindung macht sich die Erfahrungen zu Nutze, die man mit der Herstellung und Verwendung von Fullcube-Tripeln in der Technik gemacht hat. Der Fullcube-Tripel hat die vorzügliche Eigenschaft, einfallendes Licht in einem weiten Toleranzbereich des Einfallwinkels zu empfangen und nahezu vollständig an die Lichtquelle zu retroflektieren. Die Retroflexion erfolgt über die Lichtspiegelung auf den drei quadratischen Flächen des Fullcube-Tripels. Diese Winkeltoleranz für das einfallene Licht wird in der praktische Anwendung heute bei den meisten Reflexionslichtschranken genutzt. Die Montage und Ausrichtung der Rückstrahler winkelgerecht zum Sender/Empfängersystem ist einfach und fehlertolerant. Auch Strahlbewegungen durch Vibrationen werden meist von diesem Reflexionselement mit Fullcube-Tripeln toleriert. Bei der Verwendung von Laserlichtsensoren wird die Anwendung von Tripeln als Reflexionselement sehr schwierig, weil der Laser bei unsachgemäßer Anwendung Informationen über seine Bewegung auf der Retroflexionsstruktur und Informationen über die Gestalt der Retroflexionsstruktur liefert, statt über den zu beobachtenden Raum zwischen Sender/Empfänger und Retroflexionsspiegel. Die DE 197 27 527 zeigt auf, wie Retroflexionsspiegel für Lasersensoren gestaltet sein müssen, erläutert auch die Unterschiede zwischen Fullcube und pyramidalen Tripeln und lehrt, welche Gestalt das Strahlenbündel des Lasersensors haben muss. Bei Anwendung der bekannten Lehre erhält man auch mit Lasersensoren die Vorteile der Struktur aus Fullcube-Tripeln bei der vorliegenden Erfindung und kann ebenso den erfindungsgemäßen Reflektor des Weitwinkelsensorsystems nutzen.

Im weiteren Text wird nur noch von Tripelsystemen gesprochen, die dem Fullcube zugeordnet werden können. Denn man muss unbedingt bei Tripeln unterscheiden zwischen den pyramidalen Tripeln, die aus einer Grundfläche geschnitten werden können und Fullcube-Tripeln, die dagegen nur durch Zusammenfügen von Teilsegmenten herstellbar sind.

Die Herstellung der Rückstrahlertechnik kennt Fullcube-Tripel, deren Tripelachse abweichend vom Einfallslot der Reflektoroberfläche ausgerichtet ist.

Während beim Fullcube, der sogenannten Perkin-Elmer-Pyramide die Teilflächen der Tripel quadratisch sind, verwendet das erfindungsgemäße Weitwinkelsensorsystem als Tripelreflektor eine besondere Variation des Fullcube-Tripels, bei dem mindestens eine Tripelteilfläche wesentlich größer ist als die kleinste Tripelteilfläche.

Diese vergrößerte, verlängerte Tripelteilfläche verhilft dazu, auch sehr weitwinklig einfallendes Licht aufzufangen und an die übrigen Tripelteilflächen weiterzugeben, so dass das Licht in Richtung zur Lichtquelle retroflektiert wird. Es entsteht ein Tripel, der völlig überraschend in der Praxis wesentlich weitwinkliger arbeitet, als man erwarten konnte.

Dagegen werden zum Beispiel bei Rückstrahlern für Kraftfahrzeuge weitwinklig wirkende Reflexflächen durch Wölbung des gesamten Reflektors dargestellt, indem man die Reflektorfläche aus einer Vielzahl einzelner Reflexstifte bildet, die in die gewünschten Richtungen blicken, so dass mittels einer galvanischen Abformung dann ein Weitwinkelreflektor in Kunststoff abgeformt werden kann. Die dabei entstandenen Tripel haben dann immer noch gleich große, nahezu quadratische Tripelteilflächen. Die Weitwinkligkeit des entstandenen Reflektors beruht dann nur darauf, dass Tripel mit verschieden ausgerichteten Tripelachsen kombiniert wurden, so dass je nach Einfallswinkel des Lichtes immer nur ein sehr kleiner Teil der Tripel arbeitet, deren Achsen in die Lichtrichtung blicken. Die Retroflexleistung ist entsprechend sehr niedrig.

Für den erfindungsgemäßen Reflektor sind Fertigungsmethoden gewählt worden, die eine besondere Tripelfläche erzeugen, deren Charakter sich deutlich von Reflexflächen unterscheidet, welche durch Stifte gebildet wurden. Sind bei Fullcube-Reflektoren, die aus Stiften dargestellt werden, die Tripelteilflächen etwa gleich groß, quadratisch, so sind bei der besonderen Variation des Fullcube-Tripels, wie er im erfindungsgemäßen Reflektor verwendet wird, je Tripel mindestens eine Tripelteilfläche wesentlich größer ist als die kleinste Tripelteilfläche des Tripels. Erst die wesentlich vergrößerte, nämlich verlängerte Tripelteilfläche ermöglicht sehr weitwinklig einfallendes Licht einzufangen und die in Fig. 34 und die Tabelle der Fig. 35 gezeigten hervorragenden Rückstrahlwerte zu erzielen.

Einige Zeichnungen und Darstellungen dieser Erfindungsbeschreibung ähneln der DE 101 19 671 des gleichen Erfinders, die aber zum Zeitpunkt dieser vorliegenden Anmeldung noch nicht veröffentlicht ist. Die Ähnlichkeit beruht auf der Ähnlichkeit der verwendeten Herstellungstechniken für die Tripelformen.

Die erfindungsgemäße besondere Tripelform mit vergrößerter, verlängerter Tripelteilfläche erreicht man bei Darstellung der Tripel im Plattenverfahren, das in der GB-PS 269 760 von Stimson beschrieben ist. Abweichend davon aber werden natürlich die modernen Fertigungstechniken und Werkstoffe der Mikrostrukturtechnik verwendet. Aber in einem Punkt weicht die erfindungsgemäße Struktur des Reflektors deutlich von Stimson ab. Wird dort der Tripel ausgerichtet zum Einfallslot geschnitten, so sind beim erfindungsgemäßen Reflektor die Tripelachsen der Tripel stark abweichend vom Einfallslot der Reflektorfläche ausgerichtet, nämlich mindestens +/-5° und mehr und kombiniert mit Tripeln, deren Tripelachsen zum Beispiel +/-15° vom Einfallslot der Reflektoroberfläche abweichen.

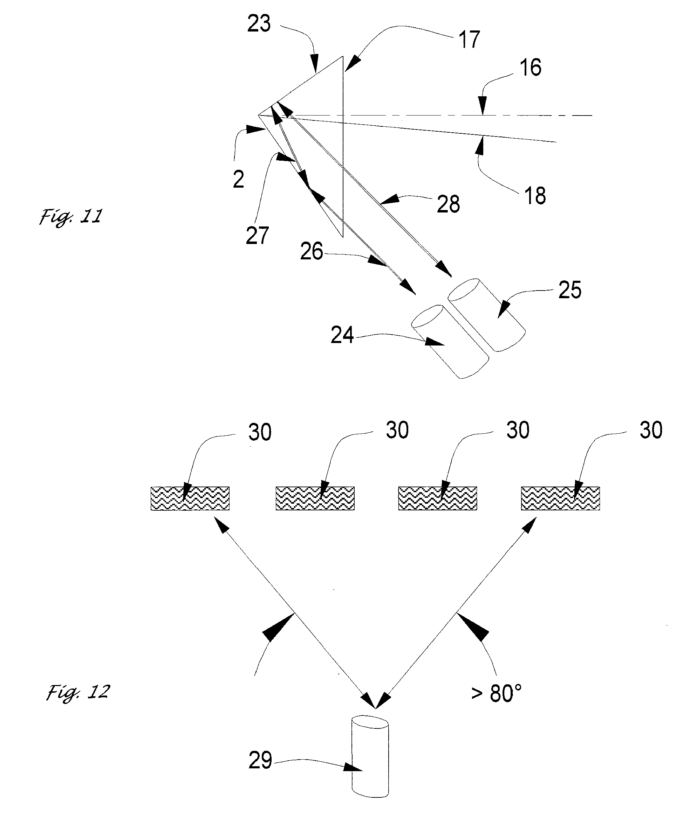

Die gewünschte verlängerte Tripelteilfläche entsteht beim Kerben der Werkzeugelementplatten bei Anwendung des Stimson Plattenverfahren durch das schräge keilförmige Einschneiden in den Platten (Fig. 11 und 12).

Eine noch ebenfalls lange, aber dazu in der Breite nahezu unbegrenzte Tripelteilfläche erhält man bei Verwendung des Plattenverfahrens, wie es Gubela in der DE 44 10 994 C2 beschrieben hat, zum Beispiel in der dortigen Fig. 13 und Fig. 14.

Beim Gubela Verfahren ist eine Ausrichtung der Tripelachsen von 5° abweichend vom Einfallslot der Reflektoroberfläche sehr vorteilhaft für das erfindungsgemäße Weitwinkelsensorsystem. Erhält man doch bei Darstellung des Reflektors mit diesem Verfahren zusätzlich eine Weitwinkligkeit nicht nur in der Horizontalen, sondern auch in der Vertikalen.

Die Erfindung schlägt einen Weitwinkelsensor mit einem Reflektor vor, bei dem zu einem Lichtsender ein Lichtempfänger so eingesetzt wird, dass der Beobachtungswinkel möglichst klein ist. Der Beobachtungswinkel von 0° bedeutet, dass der Lichtempfänger zum Lichtsender so positioniert ist, dass das vom Reflektor retroflektierte Licht auf der gleichen Achse empfangen wird, wie es gesendet wurde. Solche Anordnungen sind in der Sensorik bekannt und werden zum Beispiel durch Verwendung von halbdurchlässigen Spiegeln oder Strahlteilern gelöst. Allerdings geht bei dieser Anordnung etwas Lichtenergie verloren, weil auch unerwünschte Strahlengänge entstehen. Um solche aufwendigen optischen Einrichtungen zu vermeiden, genügt es für das erfindungsgemäße Sensorsystem den Lichtempfänger möglichst nahe an die Achse des Lichtsenders zu positionieren, so dass ein Beobachtungswinkel von größer 0°, zum Beispiel 0,2°, und nicht mehr als 1° entsteht. Dann kann der Reflektor über eine Horizontale von etwa +40° bis -40° beobachtet werden, was einem Öffnungswinkel der vom Sensor beobachteten Fläche von etwa 80° entspricht und einer dauernden Rückstrahlleistung des Reflektors von über 3.000 mcd/Ix. Durch Veränderung der Tripelachsen einiger Tripel im Reflektor bis zu etwa +/-15° und mehr kann der Öffnungswinkel noch erheblich erweitert werden. Denn mit dem Kippen der Tripelachse weg vom Einfallslot der Reflektoroberfläche, also mit der Vergrößerung der Tripelachse, vergrößert sich auch die verlängerte Tripelteilfläche, die das Licht wesentlich besser einfängt. Die verblüffende Wirkung des erfindungsgemäßen Systems beruht auf dieser besonderen Tripelgestalt des Reflektors, die die Weitwinkligkeit des Reflektors nicht nur durch das Verschwenken der Tripelachse erzielt, sondern durch die damit verbundene Vergrößerung der verlängerten Tripelteilfläche. So erzielt man bei einem horizontalem Verschwenken der Tripelachsen um +/-5° bereits eine horizontale Weitwinkligkeit von mehr als 40°, dabei bleibt aber die äußerst hohe Reflexleistung von über 9.000 mcd/Ix bei horizontal und vertikal 0° bestehen.

Die Erfindung ermöglicht also ein Weitwinkelsensorsystem mit Tripelreflektor zu schaffen durch einen Beobachtungswinkel des Weitwinkelsensors von 1° oder kleiner und der Gestaltung eines Tripelarrays für den Reflektor, der aus einer Vielzahl von Fullcube-Tripeln besteht, von denen die überwiegende Zahl von Tripeln mindestens eine wesentlich verlängerte Tripelteilfläche besitzen und deren Tripelachse um +/-5° oder mehr bezogen zum Einfallslot der Lichteintrittsfläche geneigt ist, und bei Verwendung eines Herstellverfahrens der Fullcube-Tripel mittels Stimson- Platten oder Gubela-Strängen, so dass über einen Anleuchtungswinkel von +/-40° oder mehr der Weitwinkelsensor über seinen gesamten Beobachtungswinkel von 80° oder mehr ein Retroflexsignal erhält, dessen Rückstrahlwert niemals unter 3.000 mcd/Ix sinkt und so dass der Weitwinkelsensor auch mit einem Polarisationsfilter ausgerüstet werden kann. Zusätzlich kann der Reflektor auf der Lichteintrittsfläche mit einer Fresnellinse ausgerüstet werden, die die Anleuchtweitwinkligkeit erhöht.

Bei der Besprechung der Figuren werden weitere Details der Erfindung nachstehend dargestellt.

**In den Zeichnungen zeigen**

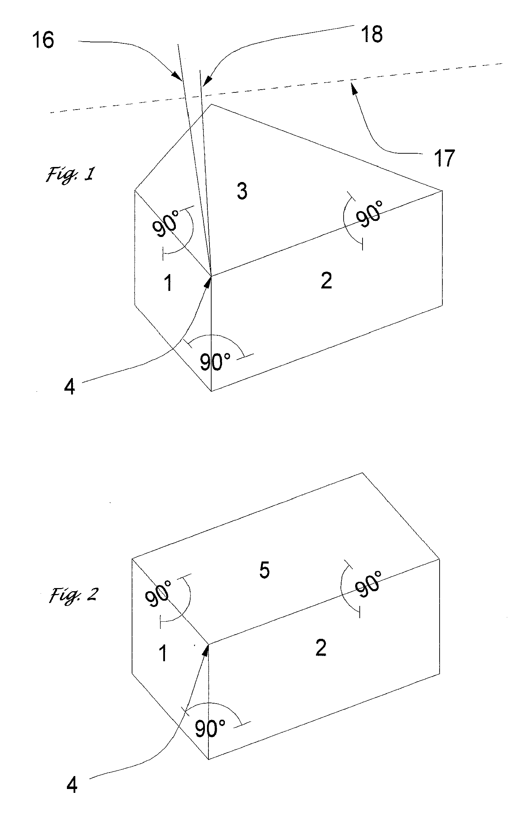

**Fig.** 1 einen einzelnen Tripel der Weitwinkelspiegelstruktur des Reflektors, nach Anspruch 1. Der Tripel besteht aus drei Spiegelflächen (1, 2, 3), die zueinander nahezu im Rechten Winkel stehen, nämlich zwischen 89° und 91°.

Die geringfügigen Abweichungen von 90° sind wegen der unterschiedlichen Brechungseigenschaften der zur Verarbeitung kommenden Kunststoffe oder Gläser und dem unterschiedlichen Schrumpfverhalten der Werkstoffe erforderlich zur im Werkzeugbau vorrauseilenden Winkelkorrektur.

Auffällig ist die Form der Spiegelfläche (3), die ein ungleichseitiges Viereck ist. Diese Form entsteht bei einer erfindungsgemäßen Weitwinkelstruktur des Reflektors, wenn die Struktur in der Horizontalen nach beiden Seiten weitwinklig sein soll, also der Neigungswinkel der Tripelachsen zu dem Einfallslot der Reflektoroberfläche für die eine Gruppe der Tripel +5° betragen soll und für die zweite Tripelgruppe -5° betragen soll. Es sei angemerkt, dass man natürlich weitere Tripel mit anderen Neigungswinkeln der Tripelachsen der Weitwinkelstruktur hinzufügen kann, zum Beispiel mit Neigungswinkel 0° oder etwa +/-15°.

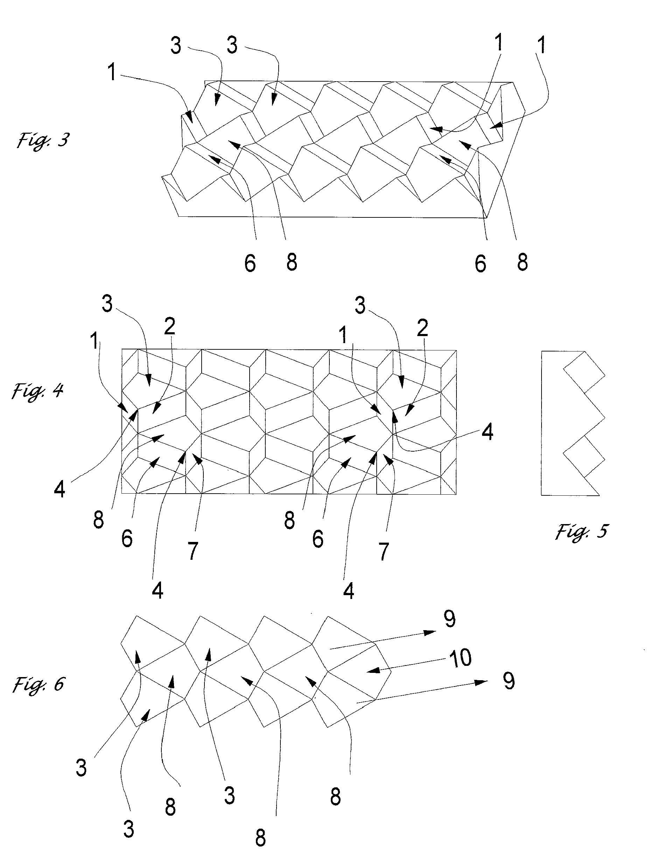

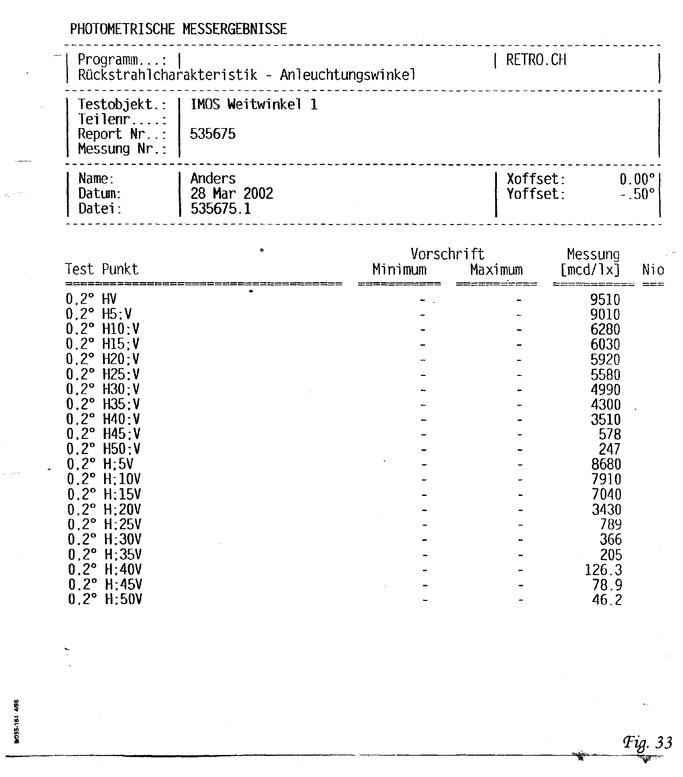

Ein wesentliches Merkmal des Tripels ist, dass die beiden Tripelteilflächen, die Spiegelflächen (2 und 3), wesentlich größer und länger sind als die Tripelteilfläche 1. Denn es soll erfindungsgemäß mindestens eine Tripelteilfläche wesentlich verlängert werden in die Richtung des zu empfangenden Lichtes aus weitwinkliger Position. So leistet die erfindungsgemäße verlängerte Tripelteilfläche (2) die Anleuchtungsweitwinkligkeit in der **Fig.** 3 horizontaler, die Tripelteilfläche (3) in wesentlich geringerer vertikaler Richtung. Siehe dazu auch die Tabelle der **Fig.** 33.

Das Zentrum des Tripels ist der tiefste Punkt (4), den alle drei Spiegelflächen berühren. Die auf eine Ebene projizierte Grundfläche des Tripels ist ein ungleichmäßiges Sechseck. Die Form des Tripels ist so beschaffen, dass er mit anderen gleichartigen Tripeln zu einer Weitwinkelspiegelstruktur des Reflektors **(****Fig.** 3 und **Fig.** 4) zusammengefügt werden kann, die aus zwei gegensätzlichen Richtungen das einfallende Licht einfangen können. Die Lichteintrittsfläche (17) des Reflektors ist hier nicht maßstabsgetreu positioniert. Das Einfallslot (16) zur Lichteintrittsfläche (17) entspricht einem direkten Einfallswinkel des Lichtes bei horizontal und vertikal 0°. Die Tripelachse (18) des Tripels ist in diesem Beispiel um etwa -5° von dem Einfallslot nach rechts wegweisend, geneigt zur Tripelteilfläche (2) hin.

Man kann bei der Neigung des Einfallslotes unterscheiden zwischen der Neigung zu den Flächen, in diesem besonderen Konstruktionsfall sogar bezogen auf drei unterschiedliche Flächen, und zur Neigung zu den Kanten des Tripels, wobei ebenfalls drei unterschiedliche Kanten zu berücksichtigen wären. Für das Verständnis der Erfindung ist ein detaillierteres Koordinatensystem für die Neigung der Tripelachse nicht erforderlich.

In den folgenden Beispielen wird von einer Neigung zu der Tripelteilfläche (2) ausgegangen.

Zur Erläuterung, Minuswerte sind für den Betrachter nach rechts weisende Neigungswerte, Pluswerte sind nach links weisende Neigungswerte.

Aber natürlich könnte die Neigung auch zu der Kante des Tripels ausgeführt werden, die von den Tripelteilflächen (2 und 3) gebildet wird. Wichtig ist für die vorliegende Erfindung, dass die Neigung der Tripelachse in Richtung der verlängerten Tripelteilfläche oder Teilflächen hin erfolgt, oder zu der Tripelkante, die aus diesen verlängerten Teilflächen gebildet wird. Denn damit wird die erfindungsgemäße Lichteinfangwirkung der verlängerten Tripelteilflächen für den Weitwinkelbereich wirksam.

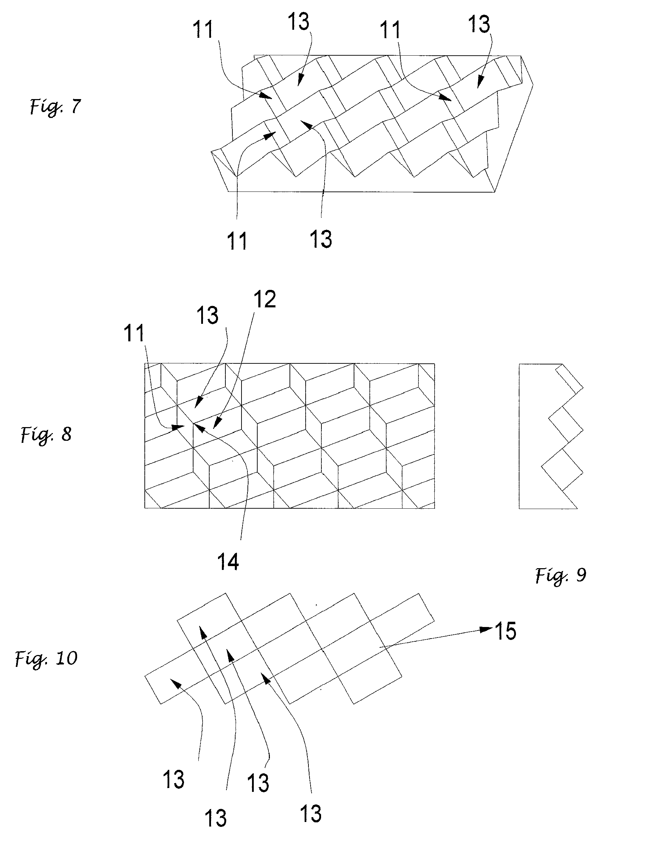

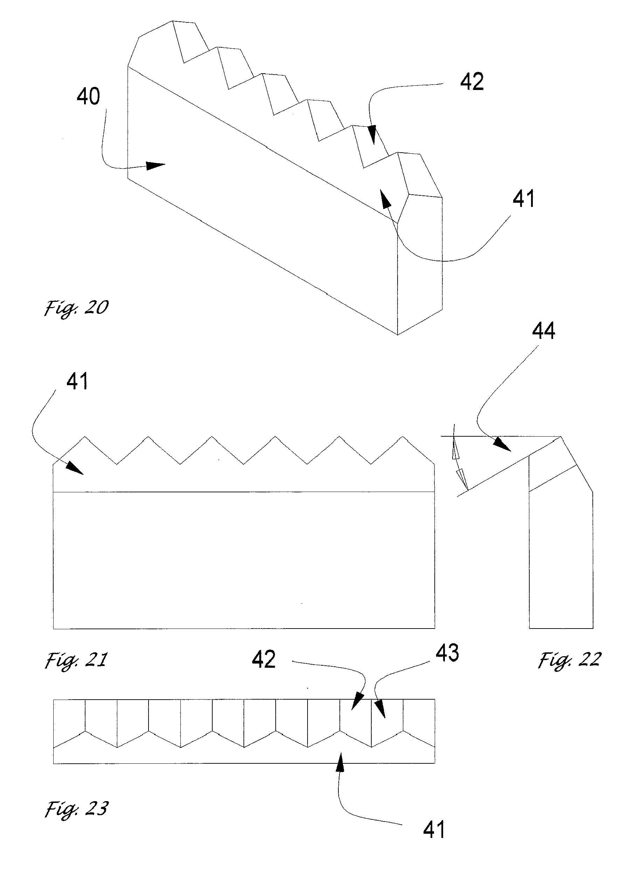

**Fig.** 2 einen einzelnen Tripel der Weitwinkelspiegelstruktur des Reflektors, wobei dieser Tripel zu einem Segment, siehe **Fig.** 20 und **Fig.** 21, der Weitwinkelspiegelstruktur gehört, die nur nach einer Seite hin für die Anleuchtung weitwinklig ausgerichtet ist, wie in den **Fig.** 7 bis 10 dargestellt. Dieser Tripel besteht aus drei Spiegelflächen (1, 2, 5), die zueinander wiederum nahezu im Rechten Winkel stehen. Er ist wie der Tripel in **Fig.** 1 mit seiner Tripelachse um -5° nach rechts geneigt zur Tripelfläche 2 hin.

Die Form der Tripelteilflächen, Spiegelflächen (2 und 5), sind jeweils gestreckte Rechtecke. Das Zentrum des Tripels ist der tiefste Punkt (4). Die auf eine Ebene projizierte Grundfläche des Tripels ist ein ungleichmäßiges Sechseck. Die Form des Tripels ist so beschaffen, dass er mit anderen gleichartigen Tripeln zu einer Weitwinkelspiegelstruktur des Reflektors **(****Fig.** 7 und **Fig.** 8) gefügt werden kann, die das einfallende Licht überwiegend aus einer Raumrichtung rechts vom Einfallslot empfängt und retroflektiert.

**Fig.** 3 eine Weitwinkelspiegelstruktur des Reflektors, die aus Tripeln der **Fig.** 1 zusammengefügt ist. Durch die perspektivische Ansicht sind jeweils die Spiegelflächen (2 und 7) der **Fig.** 4 nicht sichtbar. Die Spiegelflächen (1) und (3) zeigen die Tripel der ersten Ausrichtung. Die Spiegelflächen (6) und (8) zeigen die Tripel der zweiten Ausrichtung in ihrer um 180° gedrehten Position gegenüber den Tripeln der ersten Ausrichtung. Die Tripel einer gleichen Ausrichtung sind in Reihen angeordnet. Es wechseln sich Reihen mit gegenläufiger Ausrichtung ab. Die Ausrichtung des Tripels bestimmt grob die Raumrichtung, aus der er bevorzugt Licht empfängt.

In diesen Beispielen wird der Neigungswinkel der Tripelachse bezogen zum Einfallslot mit Minus angegeben, wenn die Neigung in der Figur für den Betrachter nach rechts zeigt und mit Plus angegeben, wenn die Neigung in der Figur nach links weist.

Diese Tripelanordnung mit +5° Neigung der Tripelachse der hintersten Reihe von Tripeln kombiniert mit Tripeln der zweiten Reihe, deren Winkelachsen der Tripel um -5° geneigt sind ergeben eine Weitwinkligkeit von 40° horizontal nach beiden Seiten des Einfallslots der Reflektoroberfläche. Das bedeutet, dass der Reflektor über einen Öffnungswinkel von mehr als 80° wirksam ist. Obwohl in diesem Beispiel alle Tripelachsen um -5° oder +5° geneigt sind, ergibt diese Tripelanordnung bei senkrechtem Lichteinfall folgend dem Einfallslot eine Reflexleistung die nahezu 100% eines Hochleistungs-Fullcube-Reflektors entspricht, dessen Tripelachsen nicht geneigt sind. Das ist ein unerwartetes Ergebnis dieser erfindungsgemäßen Konstruktion, dass die ungewöhnlich hohe Anleuchtungsweitwinkligkeit des erfindungsgemäßen Reflektors nicht durch Leistungsverlust in lotrechter Lichteinstrahlung erkauft werden muss.

**Fig.** 4 die Weitwinkelspiegelstruktur des Reflektors der **Fig.** 3 in der Sicht von oben und somit die Projektion aller Kanten auf eine Grundfläche. Die Spiegelflächen (1, 2, 3), die um das Tripelzentrum (4) angeordnet sind, bilden den Tripel der ersten Ausrichtung, siehe **Fig.** 6, Ziffer (9) . Die Spiegelflächen (6, 7, 8), die um das Tripelzentrum (4) angeordnet sind, bilden den Tripel der gegenläufigen zweiten Ausrichtung, siehe **Fig. 6****,** Ziffer (10).

**Fig.** 5 den Schnitt durch die Weitwinkelspiegelstruktur des Reflektors der **Fig.** 4. Der Schnitt durchläuft die gegenläufigen Tripelreihen.

**Fig.** 6 die Weitwinkelspiegelstruktur des Reflektors im Raum so gedreht, dass alle Spiegelflächen (3) der Tripel der ersten Ausrichtung (9) mit den Spiegelflächen (8) der Tripel der zweiten Ausrichtung (10) eine geschlossen spiegelnde Fläche für den Betrachter zeigen. Hier wird deutlich, dass die Weitwinkelspiegelstruktur des Reflektors sich aus den Tripeln der **Fig.** 1 nahtlos zusammenfügen läßt.

**Fig.** 7 die Weitwinkelspiegelstruktur des Reflektors, die einseitig nach rechts ausgerichtet ist und die aus Tripeln der **Fig.** 2 zusammengefügt ist. Durch die perspektivische Ansicht ist jeweils eine Spiegelfläche (12) der **Fig.** 8 nicht sichtbar.

**Fig.** 8 die selbe Weitwinkelspiegelstruktur des Reflektors der **Fig.** 7 in der Sicht von oben und somit die Projektion aller Kanten auf eine Grundfläche. Alle Spiegelflächen der Tripel sind Rechtecke. Die Spiegelflächen (11, 12, 13) sind um das Tripelzentrum (14) angeordnet. Alle Tripel sind gleichmäßig ausgerichtet empfangen deshalb das Licht überwiegend aus der rechten Seite vom Einfallslot.

**Fig.** 9 den Schnitt durch die Weitwinkelspiegelstruktur des Reflektors der **Fig.** 8. Der Schnitt durchläuft die alle in gleicher Ausrichtung angeordneten Tripel.

**Fig.** 10 die Weitwinkelspiegelstruktur des Reflektors der **Fig.** 7 im Raum so gedreht, dass alle Spiegelflächen (13) der Tripel gleicher Ausrichtung (15) eine geschlossen wirkende Fläche für den Betrachter zeigen wie ein einziger großer Spiegel.

**Fig.** 11 das Prinzip des Tripels mit der verlängerten Tripelteilfläche (2). Dieser stehen die beiden anderen Tripelteilflächen in nahezu Rechtem Winkel gegenüber, in dieser zweidimensionalen Skizze als Linie (23) dargestellt. Vom Einfallslot (16) der Lichteintrittsfläche (17) weicht die Tripelachse (18) um zum Beispiel 5° ab. Hier ist die Tripelachse zur verlängerten Tripelteilfläche (2) hin geneigt. Der Lichtsender (24) des Reflexsensors sendet den Lichtstrahl (26), der auf der verlängerten Tripelteilfläche (2) noch Referenzpunkte innerhalb des Tripels findet, die eine Retroflexion des Lichtes über den Strahlengang (28) zum Empfänger (25) ermöglicht. Auch wenn in diesem Beispiel Sender und Empfänger getauscht werden, ergibt sich der Strahlengang in umgekehrter Richtung.

Bei der erfindungsgemäßen Wirkung der Anleuchtungsweitwinkligkeit erweitern wahrscheinlich auch Beugungseffekte an der Kante, gebildet aus (2) und (17) der verlängerten Tripelteilfläche die Möglichkeiten der Anleuchtung.

**Fig.** 12 den Sensor (29), der die Reflektoren (30) in einem horizontalem Öffnungswinkel von größer 80° beobachten kann.

**Fig.** 13, **Fig.** 14 und **Fig.** 15 den Sensor (29), der die Reflektoren auch bei Drehung von mehr als +/- 40° abweichend von dem Strahlengang zwischen Sensor und Reflektor beobachten kann.

**Fig.** 16 in einem senkrechtem Schnitt den Reflektor (30) der auf der Lichteintrittseite (17) zusätzlich mit einer Fresnel-Linse oberflächlich strukturiert wurde. Die Fresnel-Linse verstärkt noch die Fähigkeit des Reflektors zur Weitwinkligkeit. Die theoretische Linsenform (31) hat einen im Zentrum abgeflachten Bogen und bestimmt die Gestalt der in diesem Beispiel linear in Kreisen aufgebrachten Fresnel-Struktur. Die Fresnel-Struktur läßt sich mit bekannter Technik mikronisiert im spanabhebenden Verfahren fertigen.

**Fig.** 17 den Reflektor (30) der **Fig.** 16 in Sicht auf die Lichteintrittsfläche (17) mit den linearen Kreisen der Fresnelstruktur (32) und dem planen Zentrum (33) der Oberfläche der Lichteintrittseite (17), die nicht strukturiert wurde. Für besondere sensorische Aufgaben kann die Fresnellinse auch eine vollständig andere Form haben.

Auch kann der Reflektor in sich selbst zusätzlich gewölbt sein oder nur die Lichteintrittseite.

**Fig.** 18 den Reflektor (30), in der Sicht von der Lichteintrittsfläche, mit einer Aufteilung der Reflexstruktur in die Segmente (35) und (36).

Wählt man die nach zwei Seiten wirksame Struktur der **Fig.** 3 könnte man durch 90° Verdrehen des zweiten Segments zueinander die Weitwinkligkeit sowohl horizontal wie auch vertikal nach allen vier Seiten des Reflektors weisend herstellen.

In dieser Figur wird dagegen gezeigt, dass einseitig ausgerichtete Strukturen der **Fig.** 7 gegeneinander um 180° verdreht nebeneinander angeordnet werden, so dass die Strukturfläche (34) nach links (37) wirksam ist und die Strukturfläche (35) nach rechts (36) wirksam ist. Die Pfeile zeigen die Richtung, in die die verlängerten Tripelteilflächen zeigen.

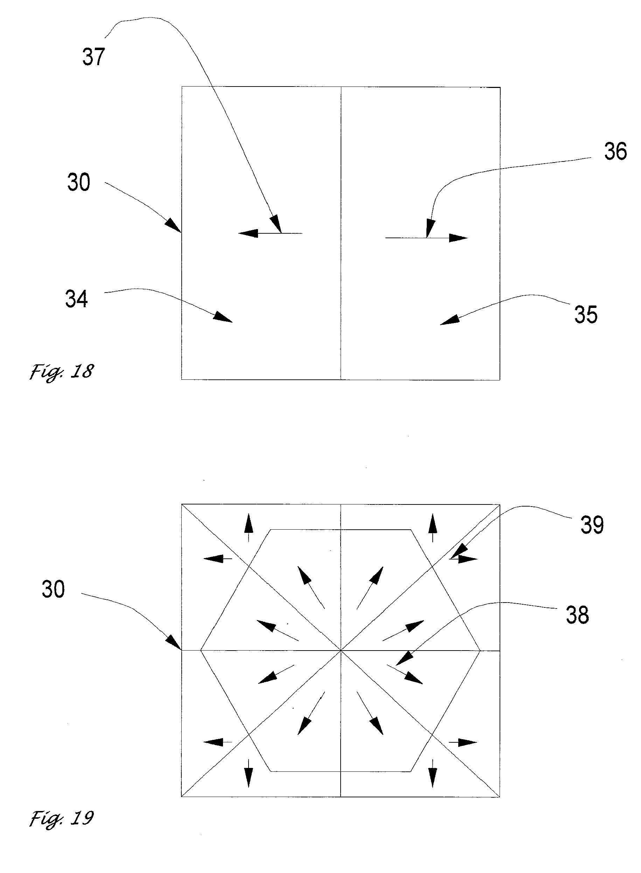

**Fig. 19** den Reflektor (30), in der Sicht von der Lichteintrittsfläche, in zahlreiche Segmente aufgeteilt, die in sehr unterschiedliche Richtungen mit den verlängerten Tripelteilflächen zeigen, zum Beispiel (38) und (39). Es können aber auch Segmente hinzugefügt werden, deren Tripel nicht geneigt sind, so dass ihre Tripelachse dem Einfallslot zur Reflektoroberfläche entspricht.

**Fig.** 20 bis **Fig.** 31 zeigen die Werkzeugherstellung zur Erzeugung der weitwinklig wirkenden Reflektoren mit Hilfe des Gubela Plattenverfahrens.

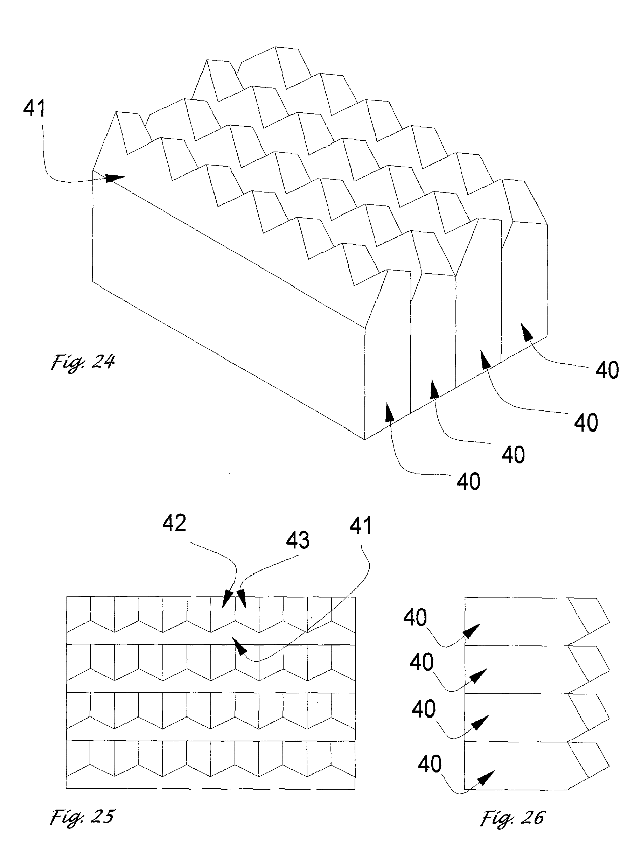

**Fig.** 20 ein Werkzeugelement (40), das als Glaskörper ausgebildet auch ein Reflektorelement selbst sein kann, mit einer Fase, die eine nahezu unbegrenzte Tripelteilfläche (41) bildet. Das plattenförmige Werkzeugelement ist an der oberen Kante gekerbt. Die Kanten der Kerben bilden die zwei weiteren Tripelteilflächen (42) und (43) in **Fig.** 25 sichtbar.

**Fig.** 21 das Werkzeugelement von der Breitseite mit der Fase (41).

**Fig.** 22 das Werkzeugelement von der Schmalseite mit dem Winkel (44), der die Lage der Kerbe bestimmt. Soll die Tripelachse zur großen Tripelteilfläche (41) geneigt werden um zum Beispiel 5°, wäre hier ein Winkel von etwa 30° zu verwenden bezogen zu der Lichteintrittsfläche des Reflektors.

**Fig.** 23 zeigt das strangförmige Werkzeugelement in der Sicht senkrecht von der Lichteintrittsfläche. Die über die ganze Länge des Stranges verlaufende Tripelteilfläche steht den Tripelteilflächen (42) und (43) gegenüber. Alle Tripelteilflächen stehen in nahezu Rechtem Winkel zueinander.

**Fig.** 24 eine vollständige Reflektorstruktur zusammengefügt aus den vier Werkzeugelementen (40).

**Fig.** 25 entspricht der **Fig.** 24 betrachtet aus dem Lichteinfallslot. Die in der Länge und in der Breite vergrößerte Tripelteilfläche (41) und die Tripelteilflächen (42) und (43).

**Fig.** 26 den Block der vier Werkzeugelemente im Schnitt.

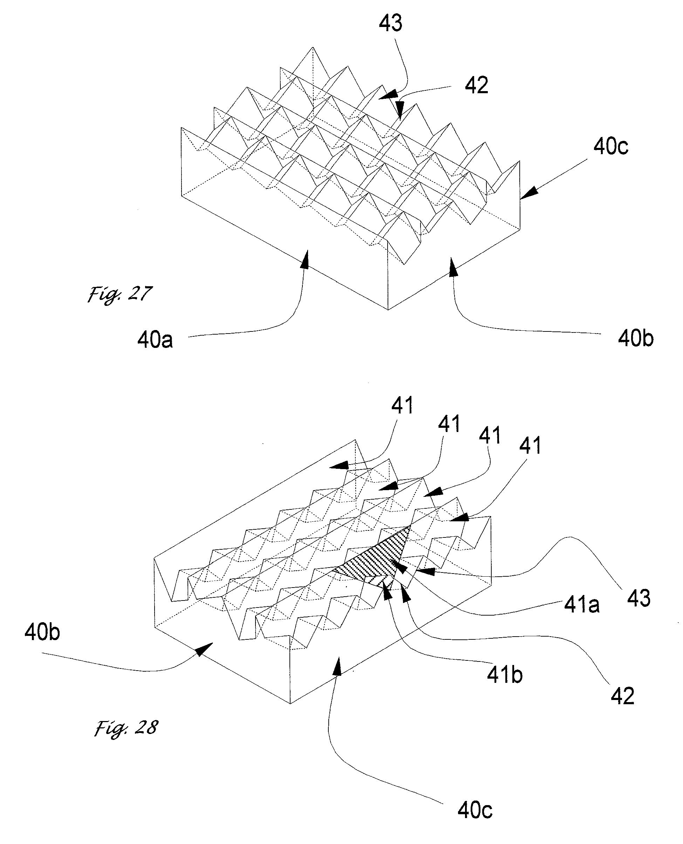

**Fig.** 27 das Negativ der **Fig.** 24, die der galvanischen Abformung entspricht und als metallischer Reflektor oder als Werkzeugstruktur zur Abformung weitwinkliger Reflektoren verwendet werden kann.

Auch als Glaskörper mit der Lichteintrittseite von unten beleuchtet ist das Negativ ein geeigneter Retroflektor.

Gekennzeichnet sind die Tripelteilflächen (42) und (43). Die Tripelteilfläche (41) ist nicht einsehbar. Die Außenkanten des Negativs sind mit (40a) und (40b) und der verdeckten Außenkante (40c) gekennzeichnet, damit man in der folgenden **Fig.** 28 die Drehung des Negativs im Bezug zum Betrachter erkennen kann.

**Fig.** 28 das zum Betrachter gedrehte Negativ aus **Fig.** 27 mit der Außenkante (40b) und der jetzt sichtbaren Außenkanten (40c). Die erfindungsgemäßen verlängerten Tripelteilflächen (41) verlaufen in ihrer Breite über die gesamte Länge des Negativs. Die Tripelteilflächen (42) und (43) stehen im nahezu Rechten Winkel zur Tripelteilfläche (41). Auf dieser ist der in dieser Darstellung sichtbare Teil (41a) und der nicht sichtbare Teil (41 b) gezeigt der tatsächlich wirksamen Tripelteilfläche (41) die zu den beiden markierten Tripelteilflächen (42) und (43) geeignete Referenzpunkte trägt, um Licht aus weitem Anleuchtwinkel einzufangen. Hier erkennt man, das die Bauart mit den Gubela Strängen Weitwinkeltripel der Gruppe der Fullcubetripel zugehörig mit einer sehr großen Lichteinfangfläche für weitwinkliges Licht ermöglicht. Denn die große Tripelteilfläche (41) kann für mehrere Tripel zugleich sich überdeckende Referenzflächen zur Verfügung stellen, die aus der Summe aller Referenzpunkte gebildet wird, die Licht einfangen können und dieses zur Retroflexion an die anderen Tripelteilflächen übergeben kann.

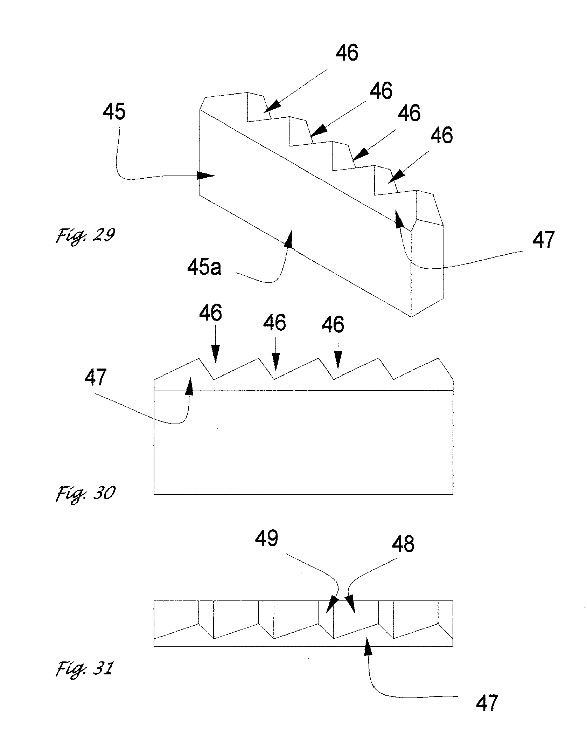

**Fig.** 29 bis **Fig.** 31 zeigen noch eine weitere Variante der Gubela Stränge, um noch zusätzliche verlängerte Lichteinfangflächen zu gestalten für eine zweite Raumrichtung, zum Beispiel einer vertikalen.

**Fig.** 29 das Werkzeugelement (45), das dem Werkzeugelement (40) aus **Fig.** 22 ähnlich ist. Jedoch sind die Kerben (46), die die Fase (47) treffen mit ungleichförmigen Seiten ausgebildet, was in **Fig.** (30) sichtbar wird.

**Fig.** 30 das Werkzeugelement im Längsschnitt mit der angedeuteten Fase (47) und den ungleichförmigen Kerben (46). Die Kanten (48) und (49) der Kerben (46) bilden die zwei Tripelteilflächen, die zur Fase (47), die der dritten Tripelteilfläche entspricht, nahezu im Rechten Winkel stehen
**Fig.** 31 die Sichtweise auf das Werkzeugelement von der Lichteintrittseite dem Einfallslot entsprechend.

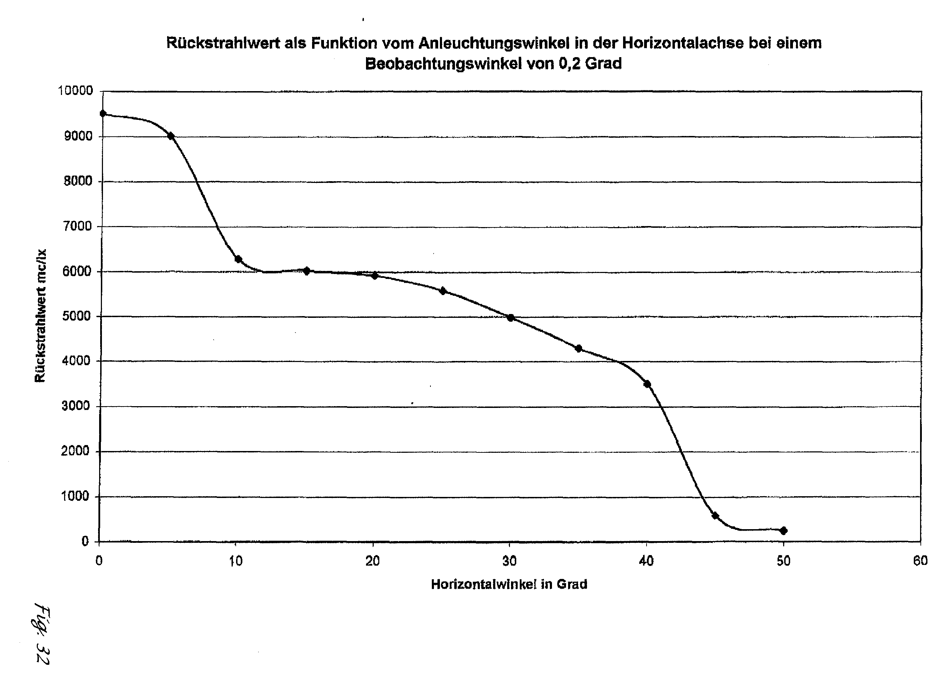

**Fig.** 32 die Rückstrahlwerte eines beispielhaften Reflektors gefertigt aus PMMA, der der retroflektiven Struktur der **Fig.** 3 entspricht, als Funktion vom Anleuchtungswinkel in der Horizontalachse der **Fig.** 4 bei einem Beobachtungswinkel von 0,2°.
Die Messmethode: Der Vertikalwinkel ist 0°. Um die Spiegelung auf der Lichteintrittsfläche des Reflektors auszublenden betragen der Xoffset 0°, der Yoffset 0,5°. Auf der x-Achse sind die Horizontalwinkel, auf der Y-Achse die Rückstrahlwerte in mcd/Ix eingetragen. Das Prüfmuster "IMOS Weitwinkel 1" ist von der Firma IMOS Gubela GmbH, Renchen, Deutschland, für den Erfinder auftragsgefertigt und besteht aus einer 50x50 mm großen Reflektorplatte mit aufgeschweißtem Rückkasten. Die Reflexfläche ist etwa 47x47 mm groß und besteht aus den erfindungsgemäßen Strukturen der **Fig.** 3 mit deutlich verlängerten Tripelteilflächen, deren Leistungsmaximum etwas aus der Horizontalen liegt. Die Reflexstruktur besteht aus Tripeln, die in Spuren gesetzt sind und deren verlängerte Tripelseite je Spur um 180° gedreht ist. Die Neigung der Tripelachsen betragen 5° jeweils zu den verlängerten Tripelflächen hin geneigt. Die Tripel sind als Mikrocubetripel ausgebildet, deren kleinste Kantenlänge etwa 1 mm beträgt. Die Tripelstruktur ist für Sensoren mit Polarisationsfilter oder Lasersensoren geeignet.

Die Bauweise der Struktur des Prüfkörpers ist wie alle in dieser Erfindung vorgeschlagenen Bauweisen der Tripelarrays auch für die Herstellung mikrostrukturierter Reflexfolien geeignet.

Was sofort auffällt, ist der außergewöhnlich hohe Rückstrahlwert bei horizontal 0° von 9.510 mcd/Ix. Damit übertrifft der Reflektor bereits die meisten am Markt befindlichen Rückstrahlflächen. Mit diesem Leistungswert ist er den zur Zeit leistungsbesten Kunststoff-Reflektoren am Markt, zum Beispiel den IMOS Microcube-Reflektoren, in der Leistung entsprechend. Man hätte erwarten können, dass ein weitwinkliger Reflektor wie in der Vergangenheit zwar wenn er denn wirklich über 40° hinaus weitwinklig wirkt, äußerst schlechte Rückstrahlwerte erbringt bei einem Anleuchtungswinkel von horizontal/vertikal 0° . Denn bisherige, als Weitwinkel bezeichnete Fullcube-Tripelkonstruktionen verteilen die Lichtenergie falsch und sind nicht in der Lage, in einem weiten Anleuchtungswinkel von über 80° leistungsstarke Retroflexion über 3.000 mcd/Ix zu erzeugen.

Bei einem Anleuchtungswinkel von 15° arbeiten bei dem erfindungsgemäßen Prüfmuster nur noch 50% der Tripel. Dennoch erreichen die Tripel aber immer noch 6.030 mcd/Ix. So wird noch bei 40° Anleuchtungswinkel 3.510 mcd/Ix erreicht.

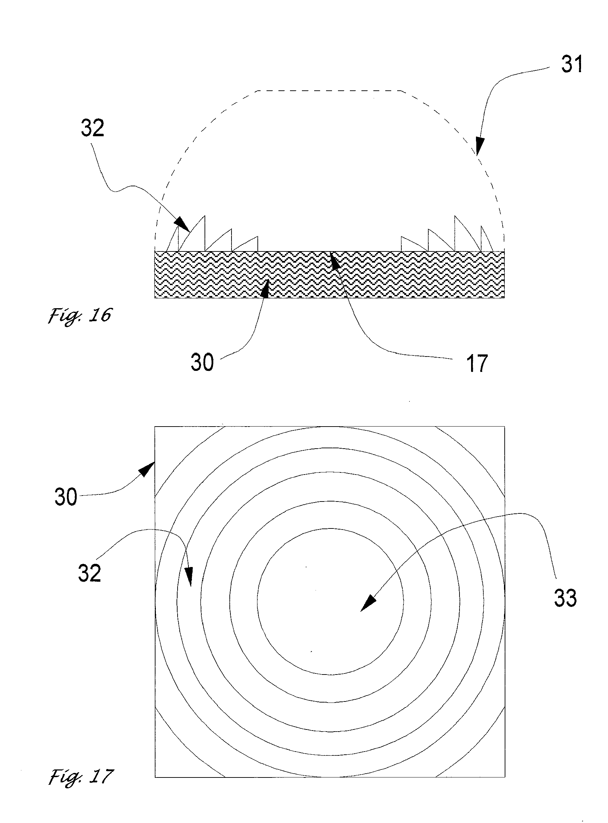

Dieses Prüfmuster ist nur ein erster Beweis für die Richtigkeit der vorgetragenen Erfindung. Werden die in dieser Erfindung vorgetragenen beispielhaften Bauweisen der Gubela Stränge, **Fig.** 20 bis **Fig.** 31 verwendet, so wird die Weitwinkligkeit nicht nur horizontal größer, sondern auch vertikal. Gleichmäßige Leistungslevel lassen sich durch Anwendung der Lehren in **Fig.** 16 bis **Fig.** 20 erzielen. Dort können die bei verschiedenen Anleuchtwinkeln erzielbaren Leistungsmaxima beim Zusammenstellen der Segmente berücksichtigt werden, so dass der Reflektor für seine Aufgaben optimiert werden kann.

**Fig.** 33 die Tabelle der photometrischen Messergebnisse im Detail der **Fig.** 32. Es bedeutet (Test Punkt), die Angabe des Beobachtungswinkel 0,2° gefolgt von den Anleuchtungswinkeln in Winkelgraden bei horizontal (H) und vertikal (V). (HV) ist der Anleuchtungswinkel bei horizontal und vertikal 0°.
Man erkennt, dass das Prüfmuster auf die horizontale Weitwinkligkeit hin gestaltet wurde.

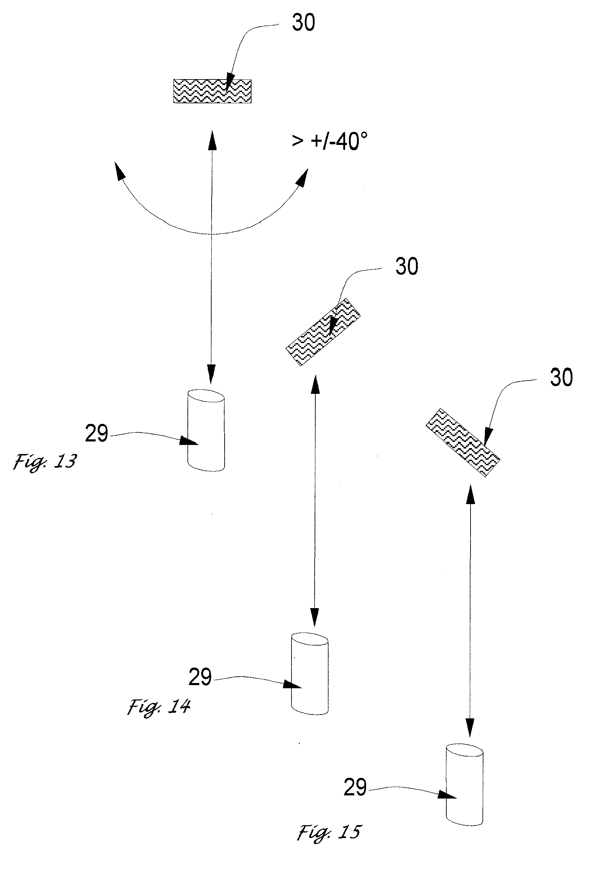

Es folgen in der Anlage die Fig. 1 bis Fig 33.

## Patentansprüche

1. Reflektor mit einer Vielzahl von Tripeln, wobei die Tripel jeweils aus drei Tripelteilflächen (1, 2, 3) bestehen, die zueinander in einem Winkel von 89° bis 91° angeordnet sind, wobei mindestens eine Tripelteilfläche von über 50 % der Tripel nicht quadratisch ist und größer ist als die übrigen Tripelteilflächen, und wobei die Tripelachse (18) dieser Tripel um mindestens 5° vom Einfallslot (16) der Lichteintrittsfläche (17) in einer Richtung hin zu der größeren Tripelteilfläche abweicht, wobei die Tripel in Reihen angeordnet sind, und wobei die Tripel zueinander benachbarter Reihen Abweichungen der Tripelachse (18) vom Einfallslot (16) in entgegengesetzte Richtungen aufweisen, **dadurch gekennzeichnet,** mindestens ein Teil seiner Lichteintrittsfläche (17) als Fresnel-Linse ausgebildet ist.

2. Reflektor nach Anspruch 1, **dadurch gekennzeichnet, dass** jeweils zwei Tripelteilflächen von über 50 % der Tripel nicht quadratisch sind und größer sind als die übrige Tripelteilfläche und dass die Tripelachse (18) dieser Tripel um mindestens 5° vom Einfallslot (16) der Reflektoroberfläche (17) in einer Richtung hin zu den größeren Tripelteilflächen abweicht.

3. Reflektor nach Anspruch 1 oder 2, **dadurch gekennzeichnet, dass** die Tripelteilflächen (1, 2, 3) Spiegelflächen sind.

4. Reflektor nach einem der vorangehenden Ansprüche 6, **dadurch gekennzeichnet, dass** seine gesamte Lichteintrittsfläche (17) als Fresnel-Linse ausgebildet ist.

5. Reflektor nach einem der vorangehenden Ansprüche, **dadurch gekennzeichnet, dass** er als optischer Glaskörper ausgebildet ist, gefertigt aus Glas, vorzugsweise Floatglas, Borosilikatglas oder Quarzglas.

6. Reflektor nach einem der Ansprüche 1 bis 4, **dadurch gekennzeichnet, dass** er aus lichtdurchlässigem Kunststoff ausgebildet ist, vorzugsweise aus Polymethylmethacrylat (PMMA), Polyvinylchlorid (PVC) oder Polycarbonat (PC).

7. Reflektor nach einem der vorangehenden Ansprüche, **dadurch gekennzeichnet, dass** er als Hartteil, als Prägeteil oder als elastische Folie ausgebildet ist.

8. Reflektor nach einem der vorangehenden Ansprüche, **dadurch gekennzeichnet, dass** die Tripel aus Metall ausgebildet sind, vorzugsweise aus Gold, Silber, Aluminium, Nickel, Messing, Kupfer, Bronze, Neusilber, Titan, Blei oder Stahl.

9. Reflektor nach einem der Ansprüche 1 bis 6, **dadurch gekennzeichnet, dass** die Tripel eine auf einen formgebenden Trägerkörper aufgebrachte Metallfläche, vorzugsweise aus Gold, Silber, Aluminium, Nickel, Messing, Kupfer, Bronze, Neusilber, Titan, Blei oder Stahl, aufweisen.

10. Reflektor nach Anspruch 9, **dadurch gekennzeichnet, dass** die Metallfläche durch Bedampfen oder Sputtern aufgebracht ist.

11. Weitwinkelsensorsystem, **gekennzeichnet durch** einen Reflektor nach einem der Ansprüche 1 bis 10 sowie einen Lichtsender (24) und einen Lichtempfänger (25).

12. Weitwinkelsensorsystem nach Anspruch 11, **dadurch gekennzeichnet, dass** der Lichtempfänger (25) mit dem Lichtsender (24) einen Beobachtungswinkel von maximal 1° einschließt.

13. Weitwinkelsensorsystem nach Anspruch 12, **dadurch gekennzeichnet, dass** der Lichtempfänger (25) so bezüglich des Lichtsenders (24) angeordnet ist, dass er reflektiertes Licht auf der gleichen Achse empfängt, auf der es vom Lichtsender (24) gesendet wurde.

14. Weitwinkelsensorsystem nach einem der Ansprüche 11 bis 13, **dadurch gekennzeichnet, dass** der Sendestrahl des Weitwinkelsensors so groß in seiner Form gewählt wird, dass er mindestens zwei Tripel des Reflektors berührt.
